Europäisches Patentamt

European Patent Office

Office européen des brevets

(19)

(11) Numéro de publication: **0 096 623**
**A1**

(12) **DEMANDE DE BREVET EUROPEEN**

(21) Numéro de dépôt: 83401065.4

(22) Date de dépôt: 26.05.83

(51) Int. Cl.³: **G 11 B 7/24**

(30) Priorité: 08.06.82 FR 8209959

(43) Date de publication de la demande:
21.12.83 Bulletin 83/51

(84) Etats contractants désignés:
DE GB IT NL SE

(71) Demandeur: THOMSON-CSF
173, Boulevard Haussmann
F-75379 Paris Cedex 08(FR)

(72) Inventeur: Lange, François
THOMSON-CSF SCPI 173, bld Haussmann
F-75379 Paris Cedex 08(FR)

(72) Inventeur: Cornet, Jean
THOMSON-CSF SCPI 173, bld Haussmann
F-75379 Paris Cedex 08(FR)

(74) Mandataire: Wang, Pierre et al,
THOMSON-CSF SCPI 173, Bld Haussmann
F-75379 Paris Cedex 08(FR)

(54) Disque optique protégé à porte-couche libre.

(57) L'invention a pour objet de disposer la couche sensible (41) sur un substrat (40) qui n'est solidaire des autres éléments constituant le boîtier (42,43) que par une seule zone de fixation, située dans la partie centrale de ce boîtier, afin que les déformations du boîter n'affectent pas la planéité du substrat.

L'invention s'applique à des structures formés d'éléments rigides ainsi qu'à celles comprenant un élément souple de fermeture.

FIG. 4

EP 0 096 623 A1

# DISQUE OPTIQUE PROTEGE A PORTE-COUCHE LIBRE

La présente invention concerne un support en forme de disque protégé destiné à l'enregistrement et à la lecture optique d'information agencée selon des spires coplanaires centrées par rapport à un axe de rotation, cette information étant contenue dans une couche porteuse constituée d'un matériau dont les propriétés optiques sont modifiées sous l'action d'un rayonnement lumineux.

Les structures de disque pour enregistrement d'information par voie optique sont généralement constituées d'une couche sensible à un rayonnement lumineux déposée sur un support rigide. Afin de protéger cette couche sensible, des dégradations mécaniques pouvant être causées par un agent extérieur, il est connu de l'enfermer entre deux plaques formant les parois d'une enceinte de protection. Une autre méthode consiste à déposer une couche de protection épaisse sur la couche sensible elle-même supportée par un substrat. Cette manière de procéder présente quelques inconvénients importants : la couche de protection épaisse déposée sur la couche sensible entraîne une chute de la sensibilité au rayonnement d'inscription ; d'autre part, les produits de sublimation ou de décomposition éventuellement formés ne peuvent se dégager, ce qui nuit à la qualité de l'inscription. Ceci a conduit à réaliser des disques optiques à enceinte de protection. Cette méthode de protection consiste à ménager au-dessus de la couche sensible un espace clos en forme de chambre annulaire par l'intermédiaire d'entretoises intercalées entre deux plaques ou par une forme en capot donnée à l'un ou l'autre des éléments cités plus haut. Les structures du disque optique protégé comprennent alors un premier élément qui supporte la couche sensible et d'un second élément solidaire du premier.

Il est connu de rendre solidaires ces deux éléments par leurs zones centrale et périphérique, soit par l'intermédiaire d'entretoises rapportées, soit par la forme en capot donnée à l'un des deux éléments, la fixation étant également assurée par les zones centrale et périphérique de la structure. Si ce genre de structure procure à la couche sensible une bonne protection contre les agents mécaniques et l'humidité, il amène cependant certains inconvénients. En effet, les structures de disque optique protégé peuvent se déformer, par exemple se bomber ou se voiler, sous l'effet de dilatations différentielles entre les éléments, par suite de l'action des agents extérieurs sur les matériaux utilisés pour fabriquer ces éléments, éventuellement sous l'effet du retrait du cordon de soudure assurant leur fixation, ou pour tout autre cause telle que la température, l'humidité, etc. Or, ces déformations, même minimes, sont très préjudiciables à la planéité de la couche porteuse de l'enregistrement car l'information se présente généralement sous la forme d'éléments microscopiques résultant de l'interaction de la couche avec un faisceau de rayonnement finement focalisé. Une solution à deux plaques de protection encadrant un support de couche avec liaisons centrale et périphérique peut occasionner des déformations intempestives.

Afin de pallier ces inconvénients, l'invention propose une structure comportant un élément porte-couche encadré par deux plaques de protection formant une enceinte ; l'élément porte-couche n'étant solidaire de l'enceinte que par une seule zone annulaire de fixation située à l'intérieur de la plage d'enregistrement. Les éventuelles déformations du boîtier constitué par les deux éléments de protection n'affectent alors sensiblement plus la planéité de l'élément porte-couche.

L'invention a donc pour objet une structure de disque protégé destiné à l'enregistrement et à la lecture optique d'information dans au moins une couche de stockage, comportant un porte-couche à face plane, l'information étant stockée dans une plage annulaire centrée sur l'axe de rotation du disque, des éléments de fermeture destinés à former un boîtier de protection étant placés de part et d'autre dudit porte-couche, ledit boîtier donnant accès à un rayonnement optique de lecture et/ou d'écriture et délimitant une chambre annulaire, ladite structure comprenant un trou central centré par rapport audit axe et permettant le passage d'une broche d'entraînement, caractérisée en ce que les éléments dudit boîtier ne sont reliés audit porte-couche que par une seule zone de fixation située à l'intérieur de ladite plage annulaire et autour dudit trou central.

D'autres objets et avantages de l'invention seront mieux compris à l'aide de la description ci-après et des figures annexées parmi lesquelles :

- les figures 1 à 3 sont des vues partielles en coupe de disques optiques protégés selon l'art connu ;

- la figure 4 est une vue partielle en coupe d'un disque optique protégé selon l'invention ;

- les figures 5 et 6 sont des variantes d'un disque optique protégé selon l'invention ;

- les figures 7 et 8 sont des vues partielles en coupe de disque optique protégé selon l'invention et comportant des éléments souples de fermeture ;

- la figure 9 est une vue de dessus de deux demi-anneaux formant un élément de boîtier de disque optique protégé.

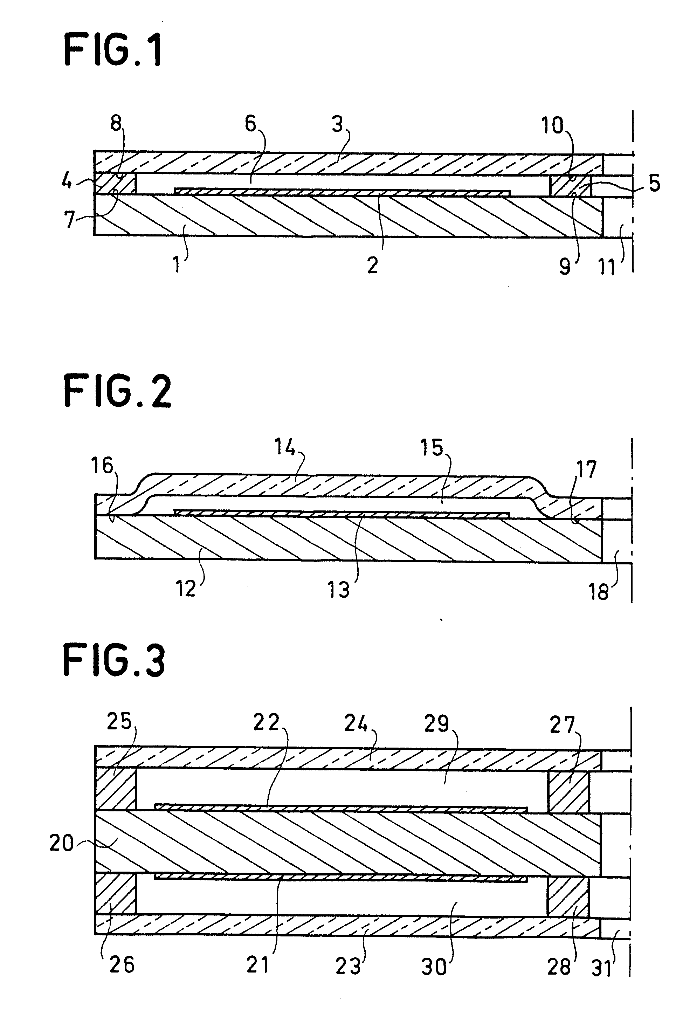

Différentes structures de disques optiques protégés ont déjà été proposées. La figure 1 est une vue partielle en coupe d'un disque optique selon l'art connu. La coupe est une coupe méridienne contenant l'axe de rotation du disque. Il en sera de même pour les figures suivantes. On aperçoit sur cette figure un substrat rigide 1 en forme de disque, formant un premier élément de la structure. Le substrat 1 supporte une couche d'inscription 2. Le deuxième élément de la structure est formé par le disque 3 maintenu au-dessus de la couche d'inscription par l'intermédiaire d'entretoises circulaires et concentriques 4 et 5. Les éléments 1 et 3 et les entretoises 4 et 5 délimitent un espace annulaire 6 qui surplombe la couche d'inscription. Les éléments 1 et 3 sont rendus solidaires par l'intermédiaire des entretoises 4 et 5. La fixation de ces éléments sur les entretoises s'effectue selon des zones périphériques 7 et 8 et des zones centrales 9 et 10. La structure est percée en son centre d'un trou 11 qui permet le passage d'une broche d'entraînement. Selon que le disque est destiné à fonctionner en réflexion ou en transmission, les matériaux des disques 1 et 3 seront choisis en conséquence. On conçoit aisément que des dilatations différentielles entre les disques 1 et 3 vont entraîner une déformation du substrat 1 qui va altérer la planéité de la couche d'inscription.

D'autres structures de disque optique protégé vont entraîner le même inconvénient. La figure 2 est aussi une vue partielle en coupe. Elle représente une structure comprenant un disque 12 formant substrat pour la couche d'inscription 13. L'élément de fermeture 14 a une forme en capot qui délimite une chambre annulaire 15. Un trou central 18 permet le passage d'une broche d'entraînement. Au moins l'un des éléments 13 ou 14 donne accès au rayonnement optique de lecture ou d'écriture. Le capot 14 est fixé sur le substrat 12 selon deux zones concentriques, une zone périphérique 16 et une zone centrale 17. On conçoit aisément dans le cas représenté par la figure 2 que les déformations du boîtier constitué par les éléments 12 et 14 vont affecter la planéité de la couche 13.

La figure 3 est une vue partielle en coupe d'une structure de disque optique double face. Elle comprend 3 éléments en forme de disque : un substrat opaque 20 supportant deux couches d'inscription 21 et 22, à raison d'une couche par face du substrat. Le boîtier de la structure est réalisé par la présence de deux éléments en forme de disque et transparents au rayonnement optique de lecture et d'écriture. Ce sont les disques 23 et 24 qui encadrent le substrat 20. Par la présence d'entretoises circulaires et concentriques 25, 26, 27 et 28, les disques 23 et 24 délimitent des chambres annulaires 29 et 30 au-dessus des couches d'inscription. Un trou central 31 permet le passage d'une broche d'entraînement. Dans ce cas également, les déformations du boîtier et du substrat vont affecter la planéité des couches d'inscription.

Afin de soustraire la couche d'inscription aux déformations se développant dans le boîtier, l'invention propose d'assurer la fixation du substrat au boîtier selon une seule zone annulaire. Les figures qui vont suivre proposent la fixation du substrat au boîtier selon une zone centrale, mais on peut concevoir également de fixer ce substrat selon une zone périphérique.

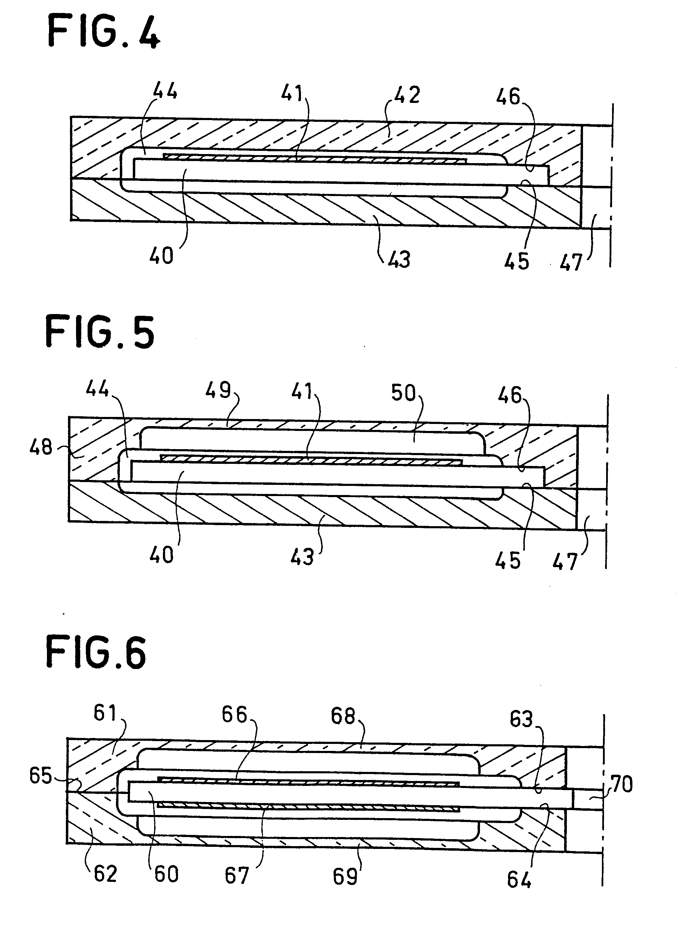

La figure 4 est une vue partielle en coupe d'une structure selon l'invention dans laquelle la couche de stockage de l'information 41 dans une plage annulaire est supportée par un substrat rigide 40 servant de porte-couche. Ce substrat peut être un disque d'aluminium d'environ 1 mm d'épaisseur. Le boîtier de la structure est constitué par les éléments 42 et 43 qui ont une forme en capot et qui délimitent une chambre annulaire 44 qui s'étend de part et d'autre du substrat 40. Ce substrat est rendu solidaire du boîtier par les zones centrales 45 de l'élément 43 et 46 de l'élément 42. Un trou central 47 assure le passage d'une broche d'entraînement. La fixation du substrat 40 sur les éléments 42 et 43 peut s'effectuer par collage, par rivetage, ou par soudure. Les éléments 42 et 43 peuvent être choisis en un même matériau ou en des matériaux différents. Ils peuvent être réalisés en matière plastique, par exemple en polyméthacrylate de méthyle (PMMA). Le matériau du substrat peut être choisi selon sa rigidité afin de minimiser les déformations dues à son propre poids. L'inscription et la lecture de la couche 41 s'effectuant par un faisceau lumineux traversant l'élément 42, celui-ci doit donc être transparent à ce faisceau et présenter une bonne qualité optique dans la zone située en vis-à-vis de la plage d'inscription.

Le substrat 40 peut être choisi en un matériau non métallique, par exemple en plastique, qui peut être un matériau hydrophile. La couche d'inscription assurant une étanchéité à l'humidité assez efficace, le substrat peut alors s'imprégner d'humidité par la face ne supportant pas la couche d'inscription et par suite d'une altération des qualités de ses faces, perdre sa planéité. Afin d'éviter ce phénomène, il est nécessaire de recouvrir cette face d'une couche d'arrêt imperméable qui, le cas échéant, peut être une couche d'enregistrement.

Dans la structure proposée, la forme géométrique du substrat n'est donc pas affectée par les éventuelles déformations du boîtier. On suppose que par construction, l'espace entre le substrat et le boîtier est suffisant pour éviter tout contact entre eux sous l'effet des dilatations ou de tout autre effet dû aux forces centrifuges lors de l'utilisation du disque optique protégé.

Les défauts de parallélisme de la partie du capot située sur le chemin du faisceau optique de lecture ou d'écriture, dus à d'éventuelles déformations, peuvent perturber la lecture ou l'écriture. Ces perturbations peuvent être minimisées en réduisant l'épaisseur du capot dans la zone située sur ce chemin. C'est ce que représente la figure 5 qui est une vue partielle en coupe d'une structure selon l'invention. Elle reprend une grande partie des constituants de la structure révélée par la figure 4 dont ils portent les mêmes références. La différence essentielle avec la figure 4 est la forme du capot 48 placé en vis-à-vis de la couche d'inscription. Celui-ci comporte un évidement 50 qui évite au faisceau optique de lecture ou d'écriture une trop forte perturbation qui pourrait être causée par l'épaisseur du capot. Dans une telle réalisation, le capot 48 possède sur le chemin du faisceau optique et centrée sur ledit axe, une plage annulaire amincie 49 ayant une épaisseur suffisamment mince (par exemple 0,5 mm ou moins) pour ne pas perturber notablement la focalisation du faisceau lumineux sur la couche 41.

Il entre dans le cadre de l'invention de réaliser des structures double-face. On peut, dans l'exemple représenté par la figure 4, disposer une seconde couche d'inscription sur la face laissée nue du substrat 40. La figure 6 représente une structure double-face qui évite les perturbations du faisceau optique de lecture ou d'écriture. C'est une vue partielle en coupe qui comprend un substrat 60 dans un boîtier formé de deux éléments 61 et 62 en forme de capot. Le substrat est rigide ; il peut être en aluminium. Il est rendu solidaire des éléments 61 et 62 selon les zones 63 et 64 situées près du centre de la structure, par collage, par rivetage ou par soudure. De même, les éléments 61 et 62 sont solidaires selon la zone périphérique 65. Le substrat supporte sur une de ses faces une couche d'inscription 66 et sur l'autre une couche 67. Les éléments 61 et 62 présentent en vis-à-vis des plages d'inscription des zones de faible épaisseur 68 et 69 (de l'ordre de 0,5 mm). Ces zones ne doivent cependant pas être choisies trop minces pour garder une certaine rigidité au boîtier. On peut remarquer que, dans cette variante, le trou de centrage 70 permet de centrer directement le substrat sur la broche d'entraînement puisque ces troux centraux dans les éléments du boîtier sont d'un diamètre supérieur au diamètre de la broche d'entraînement. Ceci est plus précis que lorsque le centrage se fait par l'intermédiaire du boîtier.

L'un des éléments de fermeture peut être constitué, dans la région surplombant la plage d'inscription, par un film souple transparent au faisceau de lecture ou d'écriture. Les films plastiques sont généralement obtenus par extrusion et calandrage et sont par suite très biréfringents. Afin de ne pas amener de perturbations sensibles au rayonnement optique dues à ces phénomènes de biréfringence, le film doit être choisi suffisamment mince. On peut par exemple employer une feuille calandrée de chlorure de polyvinyle de 0,2 mm d'épaisseur ou moins.

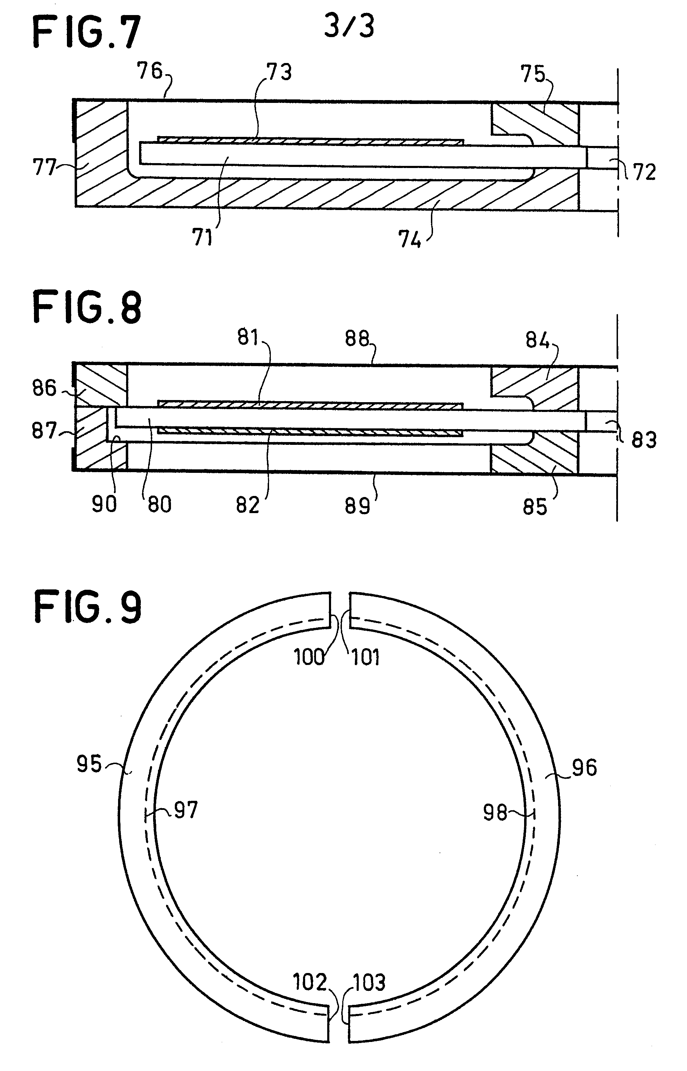

La figure 7 est une vue partielle en coupe d'une structure selon l'invention employant un tel film. On remarque le substrat 71 qui par son trou de centrage 72 viendra se centrer directement sur la broche d'entraînement. Le substrat peut être un disque d'aluminium d'environ 1 mm d'épaisseur. Il supporte une couche d'inscription 73 concentriquement au trou de centrage. Les éléments constitutifs du boîtier de protection comprennent les éléments 74 et 75 et le film 76. L'élément 74 joue le rôle de capot inférieur. On remarque que son rebord périphérique 77 remonte jusqu'au-dessus de la couche 73. L'élément 75 est limité à la partie centrale de la structure. Comme précédemment, le substrat 71 est solidaire des éléments 74 et 75. La fermeture du boîtier est complétée par un film souple 76 légèrement tendu. Il peut être constitué par une feuille calandrée de chlorure de polyvinyle de quelques centièmes de millimètres d'épaisseur. La fixation du film 76 sur les éléments 74 et 75 peut se faire par collage ou par soudage.

Il est possible d'adapter cette structure à élément souple de fermeture au cas du double face. C'est ce que représente la figure 8 qui est une vue partielle en coupe. Sur cette figure, on remarque le substrat 80 par exemple en aluminium, qui supporte sur sa face supérieure une première couche d'inscription 81 et sur sa face inférieure une seconde couche 82. Il possède un trou central 83 qui sera le trou de centrage de la structure. Sur ce substrat, en forme de disque, viennent se fixer les éléments 84 et 85 qui sont des anneaux placés concentriquement au trou de centrage 83. A la périphérie de la structure, on remarque les éléments 86 et 87 rendus solidaires par collage, par rivetage ou par soudure. L'anneau 87 possède un épaulement 90 qui permet le passage sans frottement du substrat. Un film 88 percé en son centre vient fermer la face supérieure de la structure. Il est fixé sur les éléments 84 et 86. Le film 89 assure la même fonction sur la face inférieure de la structure et est fixé sur les éléments 85 et 87. Les caractéristiques des films 88 et 89 ont été décrites précédemment. Au repos, le boîtier constitué par les anneaux 84, 85, 86 et 87 et par les films 88 et 89 repose sur la périphérie du substrat sans point de contact avec les couches d'inscription. Lorsque la structure est entraînée en rotation, du fait des forces centrifuges dues à la vitesse d'entraînement, l'ensemble formé par les anneaux 86 et 87 tend à se décoller légèrement du substrat et à tendre les films 88 et 89.

Une autre façon de concevoir les anneaux extérieurs est représentée à la figure 9 qui est une vue de dessus de deux demi-anneaux 95 et 96. Chaque demi-anneau comporte une rainure interne dont le fond est représenté par les traits en pointillés 97 et 98. Lors du montage, le substrat pénètre dans les rainures des demi-anneaux 95 et 96. Ceux-ci sont alors rendus solidaires entre eux par collage ou soudure des faces 100 et 101 ainsi que des faces 102 et 103.

Les différents boîtiers étudiés comprennent généralement des éléments en forme de capot. Il entre également dans le cadre de l'invention de remplacer ces capots par des éléments sensiblement plans associés à des entretoises.

Les structures selon l'invention se prêtent particulièrement bien aux mesures de protection destinées à combattre l'altération des couches d'inscription provoquée par oxydation ou par l'humidité. Les moyens de protection sont divers et peuvent être combinés entre eux :

- dépôt de matériau hydrophile effectué sur la paroi interne du boîtier sans aucun recouvrement de la plage d'inscription,

- revêtement barrière à l'humidité,

- matériau facilement oxydable servant de piège à oxygène.

REVENDICATIONS

1. Structure de disque protégé destiné à l'enregistrement et à la lecture optique d'information dans au moins une couche de stockage (41), comportant un porte-couche (40) à face plane, l'information étant stockée dans une plage annulaire centrée sur l'axe de rotation du disque, des éléments de fermeture (42 et 43) destinés à former un boîtier de protection étant placés de part et d'autre dudit porte-couche, ledit boîtier donnant accès à un rayonnement optique de lecture et/ou d'écriture et délimitant une chambre annulaire (44), ladite structure comprenant un trou central (47) centré par rapport audit axe et permettant le passage d'une broche d'entraînement, caractérisée en ce que les éléments dudit boîtier ne sont reliés audit porte-couche que par une seule zone de fixation située à l'intérieur de ladite plage annulaire et autour dudit trou central.

2. Structure de disque protégé selon la revendication 1, caractérisée en ce que ledit boîtier est réalisé par la forme en capot donnée à au moins l'un desdits éléments de fermeture (42 et 43).

3. Structure de disque protégé selon l'une des revendications 1 ou 2, caractérisée en ce qu'un élément de fermeture (48) comprend en vis-à-vis de ladite plage d'inscription (41) une plage annulaire amincie (49) centrée sur ledit axe.

4. Structure de disque protégé selon l'une quelconque des revendications 1 à 3, caractérisée en ce que le centrage de ladite structure sur ladite broche d'entraînement s'effectue par ledit substrat, ledit boîtier étant percé d'un trou de diamètre supérieur au diamètre de la broche d'entraînement.

5. Structure de disque protégé selon l'une quelconque des revendications 1 à 4, caractérisée en ce que ledit substrat (40) supporte une plage d'inscription (41) sur une première face et une contre-couche d'arrêt imperméable sur son autre face.

6. Structure de disque protégé selon l'une quelconque des revendications 1 à 5, caractérisée en ce que lesdits éléments de fermeture comprennent au moins un film souple (76) placé sur le chemin dudit rayonnement optique dans la région surplombant ladite plage.

7. Structure de disque protégé selon la revendication 6, caractérisée en ce qu'elle comprend une plage d'inscription (81, 82) sur chaque face dudit substrat (80) et que ledit boîtier comprend des éléments (84, 85) fixés entre lesdites plages d'inscription et ledit trou central (83), un film souple (88, 89) en vis-à-vis de chacune desdites plages et une couronne circulaire dans laquelle est ménagé un logement où pénètre le bord extérieur dudit substrat.

8. Structure de disque protégé selon la revendication 7, caractérisée en ce que ladite couronne circulaire est faite de deux anneaux (86 et 87) rendus solidaires.

9. Structure de disque protégé selon la revendication 7, caractérisée en ce que ladite couronne circulaire est faite de deux demi-anneaux (95 et 96) rendus solidaires.

10. Structure de disque protégé selon l'une quelconque des revendications 1 à 9, caractérisée en ce qu'au moins l'un des éléments dudit boîtier a reçu sur sa face interne un dépôt faisant barrière à l'humidité et ne perturbant pas ledit rayonnement optique.

11. Structure de disque protégé selon l'une quelconque des revendications 1 à 10, caractérisée en ce qu'un matériau facilement oxydable est déposé dans ladite chambre annulaire dans une zone n'occultant pas ladite plage d'inscription.

FIG.1

FIG.2

FIG.3

# FIG.4

44     41     42     46

40     43     45   47

# FIG.5

44   49   41   50   46

48

40    43    45   47

# FIG.6

61   66   68   63

65         70

62   60   67   69   64

FIG.7

FIG.8

FIG.9

**0096623**
Numéro de la demande

Office européen
des brevets

**RAPPORT DE RECHERCHE EUROPEENNE**

EP 83 40 1065

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 491 664 (STORAGE TECHNOLOGY CORP.) * Page 3, lignes 17-35; page 4, ligne 9 - page 6, ligne 24; page 7, ligne 28 - page 8, ligne 27; revendications; figures * | 1,2,4, 7 | G 11 B 7/24 |
| A | GB-A-2 072 924 (SONY CORP.) * Page de garde, le résumé; page 1, lignes 57-72, 98-121; page 2, lignes 20-36; page 3, lignes 7-28 * | 1 | |
| A | EP-A-0 051 339 (NORTH AMERICAN PHILIPS CORP.) * Page de garde, le résumé; page 2, ligne 27 - page 3, ligne 14; page 3, ligne 23 - page 4, ligne 36 * | 1 | |
| A | PATENT ABSTRACTS OF JAPAN, vol. 5, no. 150 (P81)[822], 22 septembre 1981, page 146 P 81 & JP - A - 56 83851 (TOKYO SHIBAURA DENKI K.K.) 08-07-1981 | 10 | DOMAINES TECHNIQUES RECHERCHES (Int. Cl. ³) G 11 B |
| A | PATENT ABSTRACTS OF JAPAN, vol. 5, no. 150 (P81)[822], 22 septembre 1981, page 146 P 81 & JP - A - 56 83852 (TOKYO SHIBAURA DENKI K.K.) 08-07-1981 | 11 | |

Le présent rapport de recherche a été établi pour toutes les revendications

| Lieu de la recherche LA HAYE | Date d'achèvement de la recherche 02-09-1983 | Examinateur OLDROYD D.L. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82